# EUROPÄISCHE PATENTANMELDUNG

(11) **EP 1 240 953 A2**
(43) Veröffentlichungstag der Anmeldung: **18.09.2002**
(21) Anmeldenummer: 02001988.1
(22) Anmeldetag: 05.02.2002
(51) Int. Cl.: B09B 5/00, B60R 21/16

(54) **Verfahren zur Entsorgung von Airbags und Vorrichtung zur Duchführung des Verfahrens**

(30) Priorität: 17.03.2001 DE 10113099
(71) Anmelder: Volkswagen Aktiengesellschaft, 38436 Wolfsburg (DE)
(72) Erfinder: Schreiber, Werner, Dr., 38527 Meine (DE)

(57) **Zusammenfassung**

Die Erfindung betrifft ein Verfahren zur Entsorgung von Airbags (110), insbesondere von Airbags in Kraftfahrzeugen. Die Aufgabe der vorliegenden Erfindung besteht darin, ein Verfahren und eine Vorrichtung (10) zur Durchführung des Verfahrens bereitzustellen, mittels derer die Demontage des Airbags (110) vereinfacht werden kann. Erfindungsgemäß wird diese Aufgabe dadurch gelöst, daß eine Vorrichtung (10) zum Auffangen von Gasen oder Festkörpern vor dem Airbag in dessen Einbaulage angeordnet und der Airbag (110) gezündet wird, wobei die Vorrichtung (10) vorzugsweise als Trichter (11) mit einer daran angeordneten Absaugeinrichtung (60) ausgebildet ist.

## Beschreibung

Die vorliegende Erfindung betrifft ein Verfahren zur Entsorgung von Airbags, insbesondere von Airbags in Kraftfahrzeugen, sowie eine Vorrichtung zur Durchführung des Verfahrens. Das Verfahren und die Vorrichtung sind insbesondere bei der Verwertung und Demontage zu entsorgender Kraftfahrzeuge vorteilhaft einzusetzen.

Aus der DE 196 37 677 A1 ist ein Verfahren und eine Vorrichtung zum Recycling von Airbagmodulen bekannt, bei dem nicht gezündete Airbagmodule in einem Sicherheitsbehälter zur Zündung gebracht und anschließend gemeinsam mit gezündeten Modulen aus der Kraftfahrzeugzerlegung demontiert werden. Der Sicherheitsbehälter weist dabei mindestens das fünffache des Airbagvolumens auf und bildet einen geschlossenen Raum, der durch eine dicht schließende Tür verschlossen wird. Zur Zündung des Airbagmoduls wird eine Zündkabel angeschlossen, mit einem in dem Sicherheitsbehälter angebrachten Kontakt eines Türsteckers verbunden und so abgelegt, daß der Gasgenerator auf einer eingebauten Stahlplatte zu liegen kommt. Durch das Schließen der Tür werden die elektrischen Kontakte geschlossen und der Gasgenerator kann gefahrlos gezündet werden. Für die Durchführung des Verfahrens ist ein ortsfester, relativ großer Sicherheitsbehälter erforderlich.

Aus der DE 197 53 058 C2 ist ein Verfahren zur Entsorgung pyrotechnischer Zünder sowie ein Entsorgungsgerät zu dessen Durchführung bekannt, bei dem ein Entsorgungszündbefehl an einen Zünder oder ein zwischengeschaltetes Steuergerät ausgegeben und der Zünder gezündet wird.

Aufgabe der vorliegenden Erfindung ist es, ein Verfahren zur Entsorgung eines Airbags, insbesondere eines Airbags in Kraftfahrzeugen, und eine Vorrichtung zur Durchführung des Verfahrens bereitzustellen, mittels derer die Demontage eines Airbags vereinfacht werden kann.

Diese Aufgabe wird durch ein Verfahren mit den Merkmalen des Patentanspruchs 1 sowie eine Vorrichtung mit den Merkmalen des Anspruches 8 gelöst.

Durch das Anordnen einer Vorrichtung zum Auffangen von Gasen oder Festkörpern vor dem Airbag wird der aufwendige Ausbau des Airbagmoduls vermieden und der Airbag kann in der Einbaulage innerhalb des Kraftfahrzeuges oder innerhalb einer Kraftfahrzeugkomponente - beispielsweise nach Teilausbau eines Lenkrades, Sitzes, Armaturenbrettes etc. - gezündet werden. Die Vorrichtung fängt dabei die durch die Zündung des Airbags beschleunigten Festkörper, beispielsweise Bruchstücke der Verkleidung, auf; ebenso werden die Zündgase aufgefangen, so daß der Werker, der das Kraftfahrzeug demontiert, durch die teilweise toxischen Gase nicht in seiner Tätigkeit beeinträchtigt wird. Es werden zudem keine zusätzlichen Zündimpulskontakte und ortsfeste Einrichtungen benötigt, so daß die Entsorgung örtlich flexibel durchgeführt werden kann.

Um die umherfliegenden Festkörper, Staubpartikel, Talkumpulver und die Zündgase aufzufangen und entsprechend zu kanalisieren, ist es vorteilhaft, in der Vorrichtung einen Unterdruck zu erzeugen, wodurch die Festkörper und die Gase abgesaugt werden. Durch die Absaugung insbesondere der Gase ist es möglich, unmittelbar nach der Zündung mit der Demontage des Airbags fortzufahren, ohne gesundheitliche Beeinträchtigungen für den Werker befürchten zu müssen. Die gesammelten Gase können entweder gefiltert und in die Umgebung geleitet oder in entsprechenden Auffangeinrichtungen oder Behältern gebunden oder ungebunden gesammelt werden. Durch das Absaugen entfällt die Auslüftzeit, die für jede Zündung eines Airbags ca. 10 Minuten beträgt, so daß die Demontage schneller durchgeführt werden kann.

Alternativ dazu ist vorgesehen, einen Überdruck zu erzeugen, um eine Gegenkraft zu der Kraft der Zündgase bereitzustellen, wodurch ein Umherfliegen der Festkörper und ein vollständiges Ausbreiten und Entfalten des Airbags verhindert wird. In einer Weiterbildung ist vorgesehen, daß zunächst ein Überdruck zur Eindämmung der Ausbreitung des Airbags und anschließend ein Unterdruck zur Absaugung der Gase und ggf. der Festkörper in der Vorrichtung erzeugt wird, um eine optimale Entsorgung zu ermöglichen.

In einer Weiterbildung des Verfahrens ist vorgesehen, daß die Vorrichtung an dem Bauteil, das den Airbag aufnimmt, befestigt wird, um so einerseits eine sichere Zuordnung zu dem Airbag zu gewährleisten und andererseits die auftretenden Kräfte sicher aufnehmen zu können. Insbesondere bei Lenkradairbags oder Seitenairbags ist eine einfache Befestigung durch entsprechende Klammern oder Halterungen möglich.

Um eine möglichst automatische Demontage der Airbagmodule zu ermöglichen, wodurch die Risiken für die Werker reduziert werden können, ist vorgesehen, daß die Vorrichtung maschinell vor dem Airbag positioniert wird. Alternativ, vorwiegend bei schwer zugänglichen Airbags, kann die Positionierung manuell erfolgen. Die Vorrichtung kann je nach Größe manuell oder maschinell während der Zündung gehalten werden oder die Positionierung erfolgt nur zum Zweck der Befestigung an dem entsprechenden Bauteil, z.B. dem Lenkrad.

Für die maschinelle Positionierung der Vorrichtung ist es vorteilhaft, daß die einzunehmende Position der Vorrichtung automatisch über ein Sensorsystem erfaßt wird, um eine exakte Ausrichtung zu ermöglichen. Das Sensorsystem kann dabei aus Tastern, Lichtschranken, Bilderkennungssystemen oder Induktionserkennungssystemen oder einer Kombination dieser Elemente ausgebildet sein.

Die Vorrichtung zur Durchführung des Verfahrens ist als Trichter ausgebildet, um die Gase der Airbagzündung aufzufangen und eine Schalldämmung zu bewirken. Durch das Auffangen der Festkörper, Stäube und Partikel wird einer Verschmutzung des Fahrzeuginnenraumes vorgebeugt, so daß weitere Komponenten des Fahrzeuges später ausgebaut und wiederverwendet oder weiterverwertet werden können. Auf diese Weise können die Airbags zu Beginn der Demontage durch die kontrollierte Zündung deaktiviert werden und es besteht anschließend keine Gefahr durch eine ungewollte Zündung der Airbags während der Demontage. Für die Entsorgung der Gase und Festkörper nach der Zündung ist an dem Trichter eine Absaugeinrichtung angeordnet, die einen Unterdruck erzeugt und die Gase und Festkörper einer Reinigung und Sammlung zuleitet.

Vorteilhafterweise ist der Trichter schallisolierend ausgebildet, um eine Geräuschbeeinträchtigung weitestgehend zu reduzieren. Die Schallisolierung wird dadurch bewirkt, daß die Innenseite des Trichters zumindest teilweise mit einem schallabsorbierenden oder schalldämmenden Material ausgekleidet ist. Alternativ kann der gesamte Trichter aus dem entsprechenden Material bestehen.

Alternativ oder ergänzend zu der Absaugeinrichtung ist an dem Trichter eine Überdruckeinrichtung angeschlossen, um eine der Airbagentfaltung entgegenwirkende Kraft aufzubauen.

Um eine optimale Wirkung des Trichters für den jeweils zu entsorgenden Airbag zu erreichen, ist an dem Trichter zumindest ein auswechselbares Ansatzelement angebracht ist, das an die Größe oder die Einbauumgebung des zu entsorgenden Airbags angepaßt ist. Das Ansatzelement kann auf den Trichter aufgesteckt oder angeschraubt werden und ist einfach austauschbar. Eine Weiterbildung der Erfindung sieht vor, daß der gesamte Trichter austauschbar an der Absaugeinrichtung angeordnet ist, vergleichbar der Aufsteckdüsen eines Staubsaugers, die durch einfaches Abziehen und Aufstecken auf einen Schlauch an den jeweiligen Einsatzzweck angepaßt werden können.

In einer Ausgestaltung der Vorrichtung ist vorgesehen, daß an dem Trichter ein Anschlag, vorzugsweise ein fest an dem Trichter oder dem Ansatzelement angebrachter oder ausgebildeter Vorsprung oder Steg ausgebildet ist, um den Trichter an einem Lenkrad optimal zu positionieren. Zur Befestigung des Trichters an dem Lenkrad ist weiterhin eine an dem Trichter oder dem Ansatzelement angeordnete Halteeinrichtung vorgesehen, mit dem das Lenkrad zwischen dem Anschlag und der Halteeinrichtung eingeklemmt werden kann.

Für eine einfache Montage des Trichters auf dem Lenkrad und zur Anpassung an verschiedene Lenkradtypen ist zumindest ein Ausgleichselement vorgesehen, das zwischen dem Anschlag und der Halteeinrichtung angeordnet ist und vorhandene Differenzen in den Abmessungen der Lenkräder oder anderer Einbauumgebungen auszugleichen. Um eine automatische Anpassung an unterschiedliche geometrischen Verhältnisse zu erreichen, ist vorgesehen, das Ausgleichselement als Federelement auszubilden. Mechanisch starrer, jedoch mit einem erhöhten Montageaufwand verbunden, ist eine alternative Ausbildung des Ausgieichseiementes als Justiereinrichtung, beispielsweise über eine Schraubverstellung.

Weitere Vorteile der Erfindung werden in der folgenden detaillierten Beschreibung eines Ausführungsbeispiels anhand der Figuren verdeutlicht. Aus Übersichtlichkeitsgründen sind nicht in allen Figuren sämtliche Bezugszeichen eingetragen; gleiche Bezugszeichen in verschiedenen Figuren bezeichnen gleiche Bauelemente. Es zeigen
Fig. 1 eine Schnittdarstellung einer Vorrichtung an einem Lenkrad und
Fig. 2 eine Schnittdarstellung einer Vorrichtung vor einer Instrumententafel.

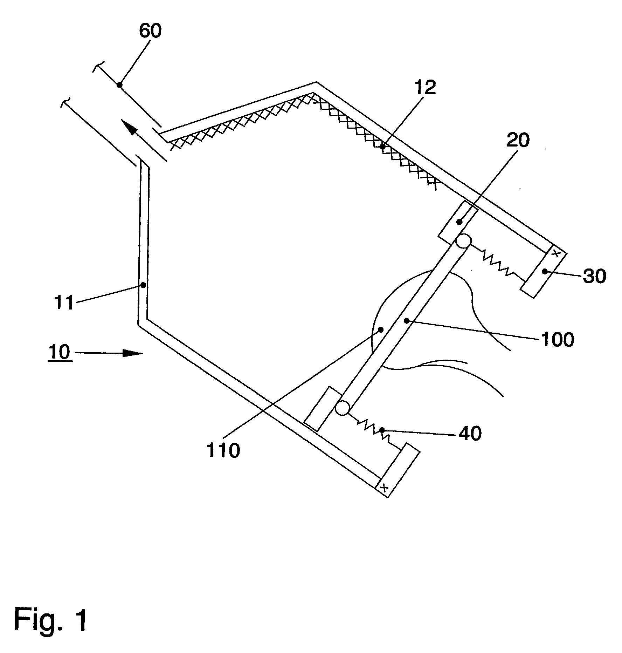

Die Figur 1 zeigt in einer Schnittdarstellung eine Vorrichtung 10 zur Entsorgung und Deaktivierung von Airbags 110 in Kraftfahrzeugen, die an einem Lenkrad 100 befestigt ist. Die Vorrichtung 10 weist einen Trichter 11 auf, der in der Einbaulage der Airbags 110 in dem Lenkrad 100 vor dem Airbag 110 angeordnet ist. Der Trichter 11 umfaßt das gesamte Lenkrad 100 und wird im Verhältnis zu dem Lenkrad 100 durch einen Anschlag 20 ausgerichtet. Der Anschlag 20 kann als umlaufender, nach innen ragender Vorsprung ausgebildet sein oder aus mehreren Einzelanschlägen bestehen, die an dem Trichter 11 einstückig ausgebildet oder an diesem befestigt sind. An dem Trichterrand sind zwei oder mehr Halteeinrichtungen 30 gelenkig befestigt, die über eine entsprechende Anzahl an Ausgleichselementen 40 den Trichter 11 an dem Lenkrad 100 fixieren. Vorliegend sind die Ausgleichselemente 40 als Federn ausgebildet, jedoch können auch starre mechanische Justiereinrichtungen, beispielsweise Gewindestangen oder Klemmen eingesetzt werden.

An dem dem Trichterrand gegenüberliegenden Ende des Trichters 11 ist eine Öffnung ausgebildet, an die sich eine nur teilweise dargestellte Absaugeinrichtung 60 anschließt. An der Absaugeinrichtung 60, die je nach Betriebsrichtung Unterdruck oder Überdruck in dem Trichter 11 erzeugen kann, ist ein elastischer Schlauch befestigt, dessen Ende, wie in der Figur 1 dargestellt, wie eine Muffe auf einen rohrförmigen Auslaß des Trichters 11 geschoben werden kann. Je nach Ausbildung des zu entsorgenden Airbags kann der Trichter ausgetauscht werden, so daß für die jeweiligen Airbags, beispielsweise in Türen, Sitzen oder der Instrumententafel, entsprechende Trichter 11 eingesetzt und angesetzt werden können.

Alternativ zu dem Austausch des gesamten Trichters 11 ist vorgesehen, daß lediglich der Bereich der Trichters 11, der mit der Einbauumgebung des Airbags 110 in Kontakt kommt, als auswechselbares Ansatzelement ausgebildet ist. Auf diese Weise muß nicht der gesamte Trichter 11 ausgewechselt werden und der Anschluß an die Absaugeinrichtung 60 oder eine Überdruck erzeugende Einrichtung kann bestehen bleiben.

Zur Entsorgung des Airbags 110 wird die Vorrichtung 10 auf das Lenkrad 100 gesetzt und zwischen dem Anschlag 20 und der Halteeinrichtung 30 mittels der Federn 40 fixiert. Anschießend wird die Absaugeinrichtung 60 in Betrieb gesetzt und ein Unterdruck in dem Trichter 11 erzeugt. Durch die folgende Zündung des Lenkradairbags 110 entfaltet sich der Airbag und Festkörper, Staub und Pulver werden innerhalb des Trichters 11 freigesetzt. Diese freigesetzten Materialien werden durch den rohrförmigen Auslaß von der Absaugeinrichtung 60 entsprechend der Pfeilrichtung abgesaugt, so daß der Fahrzeuginnenraum weder verschmutzt noch mit toxischen Gasen belastet wird.

Für eine zusätzliche Schallisolierung ist auf der Trichterinnenseite ein schallabsorbierendes oder schalldämmendes Material 12 angebracht, das beispielsweise aus einem offenporigen Schaumstoff oder dergleichen besteht. Alternativ zu der zusätzlichen Anbringung der Schallisolierung 12 ist vorgesehen, daß der gesamte Trichter 11 aus einem entsprechenden Material hergestellt ist.

Nach der Zündung der Airbags 110 wird die Vorrichtung 10 abgenommen und auf die übrigen Airbags in dem Kraftfahrzeug gesetzt, bei denen das oben beschriebene Verfahren zur Deaktivierung der Airbags ebenfalls durchgeführt wird. Nach der Zündung und damit verbundenen Deaktivierung der Airbags könne diese gefahrlos ausgebaut werden und die Demontage des Fahrzeugs kann fortgesetzt werden.

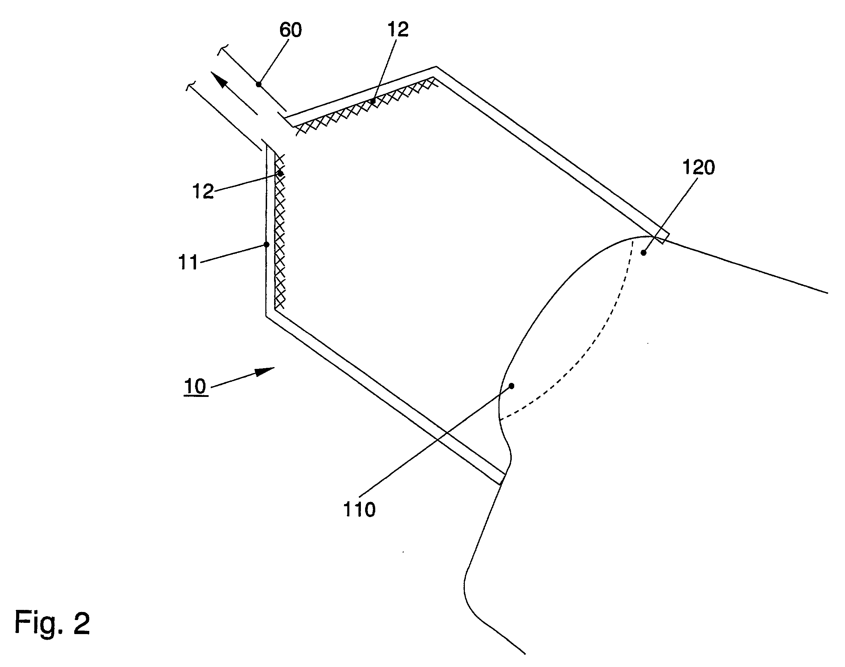

Die Figur 2 zeigt eine Variante der Erfindung, bei der die Vorrichtung 10 vor eine Instrumententafel 120 gesetzt ist, in der der Airbag 110 untergebracht ist. Das Verfahren zur Deaktivierung wird wie zu der Figur 1 beschrieben durchgeführt, mit dem Unterschied, daß die Vorrichtung nicht an der Instrumententafel 120 befestigt ist, sondern von einem Roboter, Automaten oder einer anderen maschinellen Positioniereinrichtung gehalten wird, um die bei der Zündung des Airbags entstehenden Kräfte aufzunehmen. Um die entsprechend Position der Vorrichtung 10 zu bestimmen, sind entsprechende Bilderkennungssysteme, Lichtschranken, Induktionsschleifen, Taster oder ähnliche Meßsysteme vorgesehen, die eine Rückmeldung an die Steuerung der Positioniereinrichtung senden. Alternativ zu einer automatischen Positionierung der Vorrichtung kann ein Manipulator eingesetzt werden, in dem die Vorrichtung 11 eingehängt ist und der manuell an die jeweilige Position geführt wird, beispielsweise an das Lenkrad 100 oder die Fahrzeugtür. Die Verriegelung bzw. Feststellung der Vorrichtung 11 vor dem Airbag 110 kann entweder manuell oder automatisch durchgeführt werden. Nach erfolgreicher Positionierung der Vorrichtung 10 wird der Airbag gezündet, die Gase und Festkörper abgesaugt und der Airbag kann demontiert werden.

Statt von Anfang an einen Unterdruck in dem Trichter 11 zu erzeugen, ist alternativ vorgesehen, zunächst einen Überdruck zu erzeugen, der die Entfaltung des Airbags 110 verhindert. Anschließend kann auf Saugbetrieb umgestellt werden, so daß die Gase und freigesetzten Festkörper abgesaugt, gefiltert und gesammelt werden können. Die Anlegung eines Überdruckes ist dann vorteilhaft, wenn sich hinter dem Airbag 110 eine geschlossene Fläche befindet, so daß ein dichter Abschluß gewährleistet ist bzw. ein geschlossener Raum von dem Trichter 11 und der Einbauumgebung des Airbags erzeugt werden kann.

Für eine Großseriendemontage von besonderer Bedeutung ist eine Vorrichtung, bei der beispielsweise für einen Lenkradairbag oder einen Armaturenbrettairbag oder einen Sitzairbag oder einen Türairbag jeweils Trichter vorgesehen sind, denen gemeinsam eine Positioniereinrichtung und/oder Absaugung und/oder Filterung und/oder Sensorsystems zugeordnet ist/sind.

## Patentansprüche

1. Verfahren zur Entsorgung eines Airbags, insbesondere eines Airbags in Kraftfahrzeugen oder Kraftfahrzeugkomponenten, **dadurch gekennzeichnet, daß** eine Vorrichtung (10) zum Auffangen von Gasen oder Festkörpern vor dem in Einbaulage befindlichen Airbag (110) angeordnet und der Airbag (110) gezündet wird.

2. Verfahren nach Anspruch 1, **dadurch gekennzeichnet, daß** in der Vorrichtung (10) ein Unterdruck oder ein Überdruck erzeugt wird.

3. Verfahren nach Anspruch1 oder 2, **dadurch gekennzeichnet, daß** die Vorrichtung (10) an dem Bauteil, das den Airbag (110) aufnimmt, befestigt wird.

4. Verfahren nach einem der voranstehenden Ansprüche, **dadurch gekennzeichnet, daß** bei der Zündung des Airbags (110) freigesetzten Gase und Festkörper abgesaugt, gesammelt oder gefiltert werden.

5. Verfahren nach einem der voranstehenden Ansprüche, **dadurch gekennzeichnet, daß** die Vorrichtung (10) manuell oder maschinell vor dem Airbag (110) positioniert wird.

6. Verfahren nach einem der voranstehenden Ansprüche, **dadurch gekennzeichnet, daß** die einzunehmende Position der Vorrichtung (10) automatisch über ein Sensorsystem erfaßt wird.

7. Verfahren nach Anspruch 6, **dadurch gekennzeichnet, daß** das Sensorsystem aus Tastern, Lichtschranken, Bilderkennungssystemen oder Instruktionserkennungssystemen ausgebildet ist.

8. Vorrichtung zur Durchführung des Verfahrens nach Anspruch 1, **dadurch gekennzeichnet, daß** die Vorrichtung (10) einen Trichter (11) und eine daran angeordnete Absaugeinrichtung (60) aufweist.

9. Vorrichtung nach Anspruch 8, **dadurch gekennzeichnet, daß** der Trichter (11) schallisolierend ausgebildet ist.

10. Vorrichtung nach Anspruch 9, **dadurch gekennzeichnet, daß** die Innenseite des Trichters (11) zumindest teilweise mit einem schallabsorbierenden oder schalldämmenden Material (12) ausgekleidet ist.

11. Vorrichtung nach einem der Ansprüche 8 bis 10, **dadurch gekennzeichnet, daß** an dem Trichter (11) eine Überdruckeinrichtung angeschlossen ist.

12. Vorrichtung nach einem der Ansprüche 8 bis 11, **dadurch gekennzeichnet, daß** an dem Trichter (11) zumindest ein auswechselbares Ansatzelement angebracht ist, das an die Größe oder die Einbauumgebung des zu entsorgenden Airbags (110) angepaßt ist.

13. Vorrichtung nach einem der Ansprüche 8 bis 12, **dadurch gekennzeichnet, daß** an dem Trichter (11) ein Anschlag (20) für die Anordnung des Trichters (11) an einem Lenkrad (100) angeordnet ist.

14. Vorrichtung nach Anspruch 13, **dadurch gekennzeichnet, daß** an dem Trichter (11) eine Halteeinrichtung (30) angeordnet ist, die den Trichter (11) an dem Lenkrad befestigt.

15. Vorrichtung nach Anspruch 13 und 14, **gekennzeichnet durch** zumindest ein Ausgleichselement (40), das zwischen dem Anschlag (20) und der Halteeinrichtung (30) angeordnet ist.

16. Vorrichtung nach Anspruch 15, **dadurch gekennzeichnet, daß** das Ausgleichselement (40) als Federelement oder als Justiereinrichtung ausgebildet ist.

17. Vorrichtung nach einem der Ansprüche 8 bis 16, **dadurch gekennzeichnet, daß** der Trichter (11) auswechselbar an der Absaugeinrichtung (60) angeordnet ist.
